# EUROPEAN PATENT SPECIFICATION

(11) **EP 2 031 674 B1**
(45) Date of publication and mention of the grant of the patent: **31.10.2012**
(21) Application number: 08252485.1
(22) Date of filing: 22.07.2008
(51) Int. Cl.: H01M 2/10, H01M 2/20, H01M 2/34

(54) **Battery case and battery pack using the same**
Batteriegehäuse und Batteriepack damit
Boîtier de batterie et bloc-batterie l'utilisant

(30) Priority: 30.08.2007 KR 20070087752
(43) Date of publication of application: 04.03.2009
(73) Proprietor: Samsung SDI Co., Ltd., Yongin-si, Gyeonggi-do (KR)
(72) Inventor: Ahn, Janggun, Yongin-si Gyeonggi-do (KR)
(74) Representative: Mounteney, Simon James

(56) References cited:
- US-A- 4 325 106
- US-A- 4 593 461
- US-B1- 6 365 297
- US-B1- 6 410 184

## Description

Aspects of the present invention relate to a battery case and a battery pack using the same.

Secondary batteries are chargeable and dischargeable, whereas primary batteries are not chargeable. Secondary batteries with small capacities are used for small-sized portable devices such as cellular phones, personal digital assistants (PDAs), digital cameras and the like. Secondary batteries with large capacities are used as power supplies to drive motors of hybrid cars and the like.

Secondary batteries may be manufactured in various shapes, including cylindrical and prismatic shapes. Prismatic secondary batteries are generally used for small-sized portable devices such as cellular phones, PDAs, digital cameras or the like requiring a small power consumption. A plurality of cylindrical secondary batteries in the form of a battery pack may be used for devices, such as hybrid cars, requiring a large power consumption.

A single battery pack may include a plurality of secondary batteries that are electrically connected. Each of the secondary batteries includes a cylindrical electrode assembly having a separator between a positive substrate and a negative substrate, a cylindrical can including the electrode assembly, and a cap assembly to seal an opening of the cylindrical can. The battery pack includes an external case having a storage space to store the plurality of secondary batteries that are electrically connected.

US 4 325 106 discloses "U" shaped contacts supported by walls between batteries.

However, in the conventional battery pack, the secondary batteries in the plurality of secondary batteries stored in an external case move and shake due to external movements of the device which the secondary batteries are connected to, which causes lead structures that electrically connect the plurality of secondary batteries to move. Thus, a part of the lead structures from one of the secondary batteries repeatedly contacts and separates from a lead structure of another one of the secondary batteries, which causes the resistance of the lead structures to change. Such a change affects the characteristics of charging and discharging of the battery pack, which reduces the efficiency of battery pack.

Furthermore, since the lead structures of the battery pack move as the plurality of secondary batteries moves, the curved portions of the lead structures are repeatedly bent and may even be partially or wholly severed, which reduces the performance of the battery pack or causes a loss of function in the battery pack.

US6,365,297 discloses a battery pack that is provided with at least first and second battery modules. Each battery module includes a respective first terminal extending from one end of the module and a respective second terminal extending from the other end of the module. The battery pack further includes a conductive interface having a first opening configured to receive the first terminal of the first battery module and a second opening configured to receive the second terminal of the second battery module to thereby provide an electrical series connection. An interface electrically couples the terminals of the two battery modules.

US4,593,461 discloses a power pack assembly for operating equipment such as video equipment including a plurality of power cells. The power cells are connected in series to operate video equipment, and a housing supports the power cells and includes nonconductive partitioned walls within the housing for insulating and separating adjacent ones of the power cells from each other.

US6,410,184 discloses a power source that holds a plurality of parallel orientated power modules in a holder-case. The holder-case is provided with cover casings on both sides and intermediate cases between them. Holder ribs project from the insides of the cover casings and from both sides of the intermediate casings for arranging power modules in a plurality of rows and retaining them in fixed positions.

Aspects of the present invention provide a battery case including a part to electrically connect a plurality of batteries of a battery pack to prevent a movement of the batteries, so that the electrical connection between the batteries has a constant resistance value and has a more stable electrical connection, and a battery pack using the same.

Aspects of the present invention also provide a battery case, which enables a lead structure used to connect a plurality of batteries of a battery pack to prevent the batteries from moving, and to further prevent a large external force from bending or damaging a curved portion thereof.

According to the present invention there is provided a battery pack as claimed in Claim 1. Preferred features are set out in Claims 2 to 13.

According to an aspect of the present invention, a battery pack includes an external case in which a storage space is formed, a plurality of unit batteries aligned in the storage space of the external case, a lead member having a curved portion and two sides extending from two ends of the curved portion, wherein the lead member is placed between the plurality of unit batteries and the sides of the lead member are electrically connected to the plurality of unit batteries, and a support member inserted between the sides of the lead member to prevent the plurality of unit batteries from moving within the external case.

The lead member is preferably an elongated plate wherein, and a length of the support member is half a maximum length of the lead member.

The support member is preferably formed of an insulating material.

The support member Is formed of an elastic material.

The support member comprises a rib integrally formed with the inner surface of the external case.

The external case may comprise a resin molding integrally formed with the support member.

The external case may include a lower case part including the storage space and an upper case part to cover the storage space of the lower case part, wherein the support member protrudes from an inner surface of the lower case part.

The external case can include a lower case part including the storage space and an upper case part to cover the storage space of the lower case part, wherein the support member protrudes from an inner surface of the upper case part facing a bottom surface of the lower case part.

The external case may include a lower case part including the storage space and four side surfaces connected to the lower case part and disposed in a substantially perpendicular direction to an inner surface of the lower case part, and an upper case part covering the storage space of the lower case part, wherein the support member protrudes from one of the side surfaces of the lower case part.

The plurality of unit batteries preferably comprises rechargeable secondary batteries.

In one embodiment the plurality of unit batteries include at least one pair of cylindrically shaped unit batteries with flat sections at corresponding ends thereof and which are aligned such that a flat section of one of the cylindrically shaped unit batteries faces a flat section of another one of the cylindrically shaped unit batteries, wherein the lead member is disposed between the said facing flat sections of the one and the another cylindrical unit batteries and is electrically connected to the said facing flat sections of the one and the another cylindrical unit batteries facing each other.

The plurality of cylindrical unit batteries may include a plurality of the pairs of cylindrically shaped unit batteries aligned in a plurality of rows.

The lead member is preferably installed between the flat sections facing each other in each of the plurality of rows of the cylindrically shaped unit batteries, wherein plural support members are provided and wherein each of the support members is inserted in a lead member such that the support members respectively correspond to each row of the cylindrically shaped unit batteries.

In another preferred embodiment the lead member extends across the plurality of rows of the cylindrically shaped unit batteries, wherein the support member is inserted into the lead member and extends across the plurality of rows of the cylindrically shaped unit batteries.

In a further embodiment the plurality of unit batteries includes prismatic shaped unit batteries with side surfaces at corresponding ends thereof and which are aligned such that a side surface of one of the prismatic shaped unit batteries faces a side surface of another one of the prismatic shaped unit batteries, wherein the lead member is disposed between the facing side surfaces of the one prismatic shaped unit battery and the another prismatic shaped unit battery and is electrically connected to the said facing side surfaces of the one prismatic shaped unit battery and the other prismatic shaped unit battery.

The plurality of prismatic shaped unit batteries may include a plurality of the pairs of the prismatic shaped unit batteries aligned in a plurality of rows.

According to another aspect of the present invention, a battery case includes a case body including a battery storage space for storing a plurality of batteries, and a support member protruding from an inner surface of the case body in order to support the plurality of unit batteries when stored in the battery storage space. The battery case preferably includes the plurality of batteries.

Additional aspects and/or advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 is a' cross-sectional view of a battery connection structure of a battery pack according to an embodiment of the present invention;
FIG. 2 is a cross-sectional view of a modified lead member when the battery connection structure of the battery pack is not applied according to an embodiment of the present invention;
FIG. 3 is a partial cross-sectional view of the battery pack of FIG. 1;
FIG. 4 is a partial cross-sectional view of a battery pack according to another embodiment of the present invention;
FIG. 5 is a partial cross-sectional view of a battery pack according to another embodiment of the present invention;
FIG. 6 is an exploded perspective view of the battery pack shown in FIG. 4;
FIG. 7 is a cross-sectional view of the battery pack of FIG. 6 taken along a line B-B in FIG. 6;
FIG. 8 is an exploded perspective view of a battery pack according to another embodiment of the present invention;
FIG. 9 is a cross-sectional view of the battery pack of FIG. 8 taken along a line C-C in FIG. 8;
FIG. 10 is an exploded perspective view of a battery pack according to another embodiment of the present invention;
FIG. 11 is a cross-sectional view of the battery pack of FIG. 10 taken along a line D-D in FIG. 10;
FIG. 12 is a perspective view of a battery case according to an embodiment of the present invention; and
FIG. 13 is a plan view of a battery pack according to another embodiment of the present invention.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

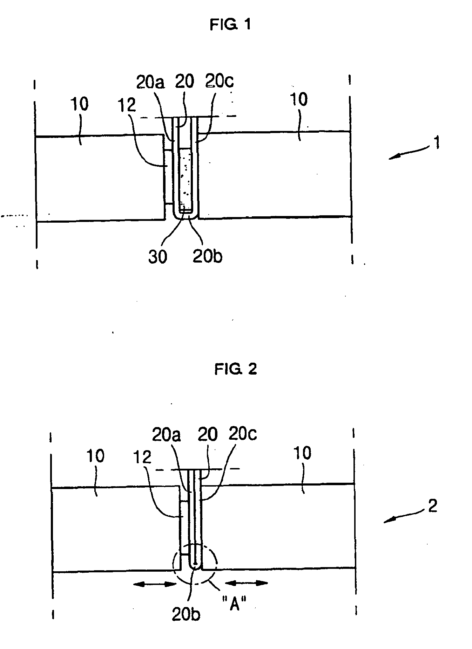

FIG. 1 is a cross-sectional view of a battery connection structure of a battery pack according to an embodiment of the present invention. FIG. 2 is a cross-sectional view of a modified lead member when the battery connection structure of the battery pack shown in FIG. 1 is not applied according to an embodiment of the present invention.

Referring to FIG. 1, the battery pack 1 has an electrical connection structure in which a lead member 20 is installed between left and right columns of unit batteries 10 among a plurality of the unit batteries 10 arranged in parallel with each other in rows. The unit batteries 10 are electrically connected via the lead member 20, and each unit battery includes an electrode cap 12. The lead member 20 includes sides 20a and 20c that are disposed in parallel with each other, and a curved portion 20b disposed between and connecting the sides 20a and 20c, such that the sides 20a and 20c and the curved portion 20b form a "U" shape. The sides 20a and 20c of the lead member 20 which extend from the curved portion 20b are electrically connected to the plurality of unit batteries 10. A support member 30 is disposed between the sides 20a and 20c of the lead member 20 which extend from the curved portion 20b. The support member 30 prevents the sides 20a and 20c of the lead member 20 from contacting each other.

Referring to FIG. 2, when a battery pack 2 does not include the support member 30, the plurality of unit batteries 10 move in left and right directions corresponding to the arrows when the device connected to the battery pack 2 is moved or impacted by an external force. As a result, a portion A of the lead member 20 may be deformed such that the sides 20a and 20c contact each other. In addition, the curved portion 20b may be bent and straightened out since stress is applied to the curved portion 20b, which causes inconsistent electrical resistance of the lead member 20. Moreover, without the support member 30 reliable contact between the sides 20a and 20c of the lead member and the adjacent faces of the unit batteries 10 is not ensured. These factors adversely affect the charging and discharging characteristics of the plurality of unit batteries 10. Furthermore, the curved portion 20b of the lead member 20 may be completely broken due to repetitive bending of the curved portion 20b.

The support member 30 is inserted between the sides 20a and 20c of the lead member 20, so that the sides 20a and 20c of the lead member 20 are spaced apart from each other all the time. The support member 30 prevents the plurality of unit batteries 10 from moving to contact each other, which prevents the curved portion 20b from being bent. In more detail, the sides 20a and 20c having the curved portion 20b therebetween are spaced apart from each other by the support member 30 all the time, so that the plurality of unit batteries 10 has a constant resistance in the electrical connection between each of the electrically connected unit batteries 10, and the curved portion 20b is not broken due to the repetitive bending thereof, thereby improving structural stability of the lead member 20.

The support member 30 is preferably formed of an insulating material. In this case, the support member 30 prevents the sides 20a and 20c of the lead member 20 extending from the curved portion 20b from contacting each other, thereby preventing the resistance of the lead member 20 from changing.

In the preferred embodiment the support member 30 is formed of an elastic member, which effectively prevents a large amount of stress from being applied to the curved portion 20b of the lead member 20. In more detail, when the support member 30 is formed of an elastic material, the support member 30 fully absorbs pressure generated in the direction that both sides 20a and 20c of the lead member 20 contact each other (left and right directions in FIG. 1) and effectively prevents a large amount of stress from being applied to the curved portion 20b of the lead member 20. It is understood that the support member 30 may be formed of either an insulating material or an elastic material, or may be formed of a material which is both insulating and elastic, such as certain types of rubbers, plastics, etc.

The lead member 20 is preferably formed of a long or elongated conductive plate or sheet material, such as a rectangular plate or sheet material, that has been shaped to create the lead member 20. The length of the support member 30 may be one half of the entire length of the lead member 20 (that is one half of the maximum length of the plate from which the lead member is formed), a quarter of the entire length of the lead member 20, an eight of the entire length of the lead member 20, or may be formed to be a wide range of lengths in various increments, such as, for example, three quarters of the entire length of the lead member 20, five eighths of the entire length of the lead member 20, three eights of the entire length of the lead member 20, etc. Thus, the length of the support member 30 may be a wide range of lengths relative to the length of the lead member 20, and is not limited to being any certain length. When the length of the support member 30 is one half of the entire length of the lead member 20, the sides 20a and 20c of the lead member 20 are completely separated from the curved portion 20b, preventing the sides 20a and 20c from contacting each other.

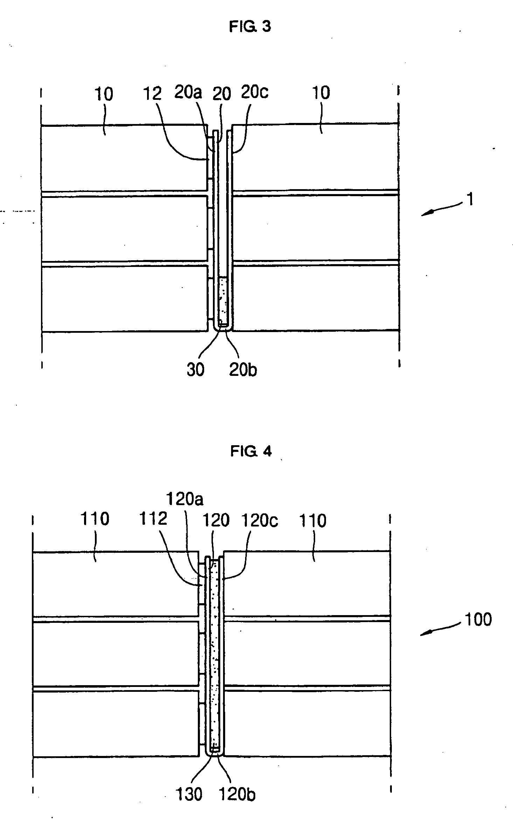

FIG. 3 is a partial cross-sectional view of the battery pack 1 shown in FIG. 1. Referring to FIG. 3, the battery pack 1 includes the lead member 20 and the support member 30 that are installed between corresponding pairs of the plurality of unit batteries 10, which are exemplarily aligned in three rows in the vertical direction. It is understood that more or less than three rows of unit batteries 10 may be used. The lead member 20 includes the sides 20a and 20c which are arranged in parallel with each other and the curved portion 20b disposed between the both sides 20a and 20c, such that the lead member 20 forms a "U" shape. The sides 20a and 20c of the lead member 20 which extend from the curved portion 20b are electrically connected to the plurality of unit batteries 10. The sides 20a and 20c are connected to different polarities of the plurality of unit batteries 10, so that each of the unit batteries 10 in a corresponding pair of the unit batteries 10 is respectively connected in parallel to one of the sides 20a and 20c of the lead member 20. The support member 30 is inserted between the sides 20a and 20c of the lead member 20. In one preferred embodiment the support member 30 is inserted deep enough into the lead member 20 so that a leading edge of the support member 30 is installed adjacent to the curved portion 20b of the lead member 20. However, it is understood that the support member 30 is not required to be inserted so deep that an edge thereof is adjacent to the curved portion 20b, and the support member 30 may instead be spaced apart from the curved portion 20b.

FIG. 4 is a partial cross-sectional view of a battery pack according to another embodiment of the present invention. Referring to FIG. 4, the battery pack 100 includes a lead member 120 and a support member 130 that are installed between a plurality of unit batteries 110 aligned in three rows in the vertical direction so that the lead member 120 extends across the plurality of rows of unit batteries. It is understood that more or less than three rows of unit batteries 110 may be used in different embodiments. The lead member 120 includes sides 120a and 120c, and a curved portion 120b disposed between and connecting the sides 120a and 120c. The support member 130 is installed between the sides 120a and 120c connected to the curved portion 120b of the lead member 120.

As shown in FIG. 4, the support member 130 has a longer shape than the support member 30 shown in FIG. 3, and is installed throughout the plurality of unit batteries 110 aligned in three rows so that the support member 130 extends across the plurality of rows of unit batteries.

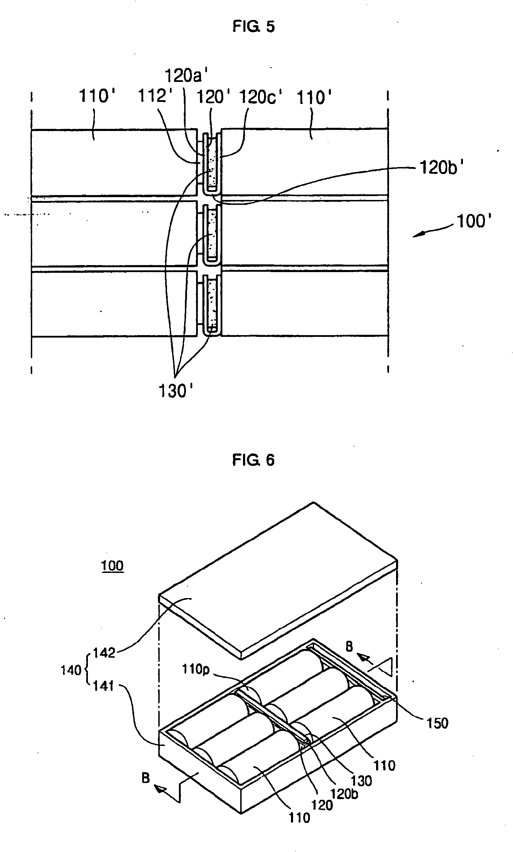

Meanwhile, referring to FIG. 5, the battery pack 100' includes a lead member 120' and a support member 130' that are installed between a plurality of unit batteries 110' aligned in three rows in the vertical direction. It is understood that more or less than three rows of unit batteries 110' may be used. The lead member 120' includes sides 120a' and 120c' and a curved portion 120c' disposed between and connecting the sides 120a' and 120c'. As shown in FIG. 5, the support member 130' includes a plurality of support members 130', each of which is installed in a corresponding row of the plurality of unit batteries 110' aligned in three rows. As shown in FIGs. 4 and 5, electrode caps 112 and 112' correspond to a polarity of the plurality of unit batteries 110 and 110'. It is understood that other aspects of the present invention are not limited to having a support member 130' corresponding to each row of unit batteries 110', and that there may instead be, for example, a support member 130' corresponding to every other row of unit batteries 110', or support members 130' provided according to some other ratio which is not 1:1 with the rows of unit batteries 110'.

The sides 120a, 120c, 120a', and 120c' extending from the respective curved portions 120b and 120b' of the lead members 120 and 120' are completely spaced apart from each other by the support members 130 and 130'. In more detail, the support member 130 and 130' prevent the sides 120a, 120c, 120a', and 120c' of the lead members 120 and 120' from contacting each other, and prevent the curved portions 120b and 120b' from being bent into a straight line or in any other manner.

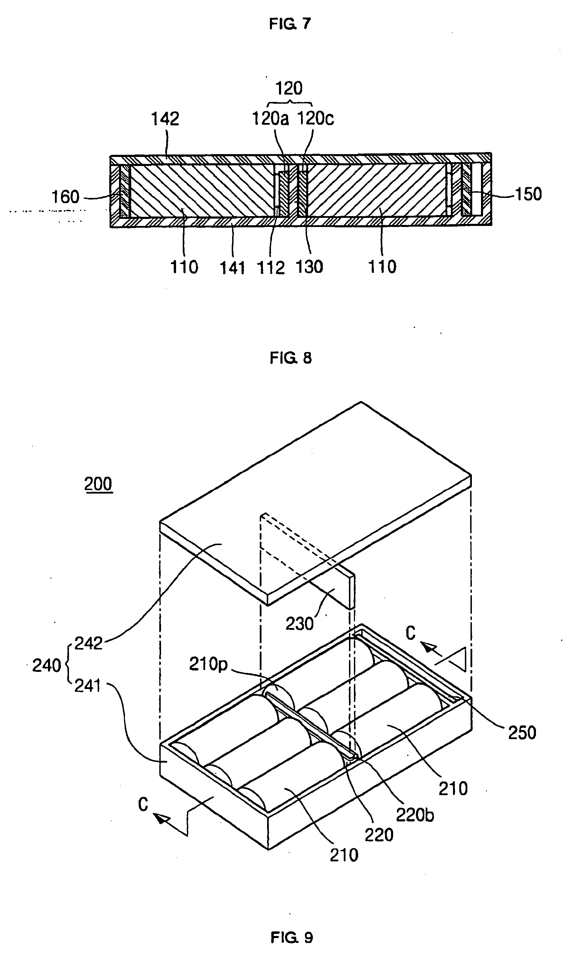

FIG. 6 is an exploded perspective view of the battery pack 100 shown in FIG. 4. FIG. 7 is a cross-sectional view of the battery pack 100 of FIG. 6 taken along a line B-B in FIG. 6.

Referring to FIGs. 6 and 7, the battery pack 100 includes a plurality of cylindrically shaped unit batteries 110, a lead member 120, and an external case 140 including a rib type support member 130. The external case 140 has a storage space in which the cylindrically shaped unit batteries 110 are aligned. The cylindrically shaped unit batteries 110 are aligned in three rows having two cylindrically shaped unit batteries 110 in each row, where each cylindrically shaped unit battery 110 has a flat section 110p facing a corresponding flat section 110p of the other cylindrically shaped unit battery 110 in the row. However, the present invention is not limited to the number and configuration of the aligned plurality of cylindrically shaped unit batteries 110 shown in FIG. 6. Instead more or less than three rows of cylindrically shaped unit batteries 110 configured in similar or different fashions may be provided.

The lead member 120 is installed between the left and right side columns of the cylindrically shaped unit batteries 110. The lead member 120 includes the sides 120a and 120c disposed in parallel with each other, and the curved portion 120b disposed between and connecting the sides 120a and 120c. In more detail, the lead member 120 is in the form of a long plate in which the curved portion 120b is formed in the middle of the lead member 120. The lead member 120 connects two different polarities of the cylindrically shaped unit batteries 110 formed at both sides 120a and 120c having the curved portion 120b therebetween. The flat sections of the unit batteries 110 are aligned in parallel to the sides 120a and 120c of the lead member 120.

In this embodiment the support member 130 protrudes from the external case 140. The support member 130 is disposed between the sides 120a and 120c of the lead member 120. The support member 130 is formed to have a length corresponding to a length of the lead member 120 and is inserted between the left and right columns of the cylindrically shaped unit batteries 110. However, the present invention is not limited to having a single support member 130 inserted across the entire external case 140. Instead a plurality of support members 130 which are respectively inserted into the middle of each row of the plurality of cylindrically shaped unit batteries 110, in a similar fashion to the support members 130' shown in FIG. 5 may be provided.

The external case 140 includes a lower case part 141 and an upper case part 142. The support member 130 protrudes from the bottom surface of the lower case part 141. The lower case part 141 includes a storage space for the plurality of cylindrically shaped unit batteries 110. In the preferred embodiment, the lower case part 141 is a resin molding integrally formed with the support member 130. The battery pack 100 further includes a protection circuit board 150. A space to install the protection circuit board 150 is disposed at an end of the lower case part 141, i.e., at one side of the rows of the cylindrically shaped unit batteries 110 as shown in FIG. 6. The upper case part 142 may also be a resin molding like the lower case part 141. A terminal 160 electrically connects the plurality of cylindrically shaped unit batteries 110, and may be disposed at another end of the lower case part 141 opposite the one end. An electrode cap 112 is made of a material which is charged to one of the polarities of the plurality of cylindrically shaped unit batteries 110. It is understood that the lower case part 141 and upper case part 142 are not limited to being made of resin, and either or both of the lower case part 141 and upper case part 142 may be made of other types of materials commonly used to make battery pack cases, such as plastic, etc.

The operation of the support member 130 has already been described in detail with reference to FIGs. 4 and 5, and thus a detailed description thereof is not repeated.

FIG. 8 is an exploded perspective view of a battery pack according to another embodiment of the present invention. FIG. 9 is a cross-sectional view of the battery pack of FIG. 8 taken along a line C-C in FIG. 8.

Referring to FIGs. 8 and 9, the battery pack 200 includes a plurality of cylindrically shaped unit batteries 210, a lead member 220, a support member 230, and an external case 240. The external case 240 has a storage space in which the cylindrically shaped unit batteries 210 are aligned in rows. The external case 240 includes a lower case part 241 and an upper case part 242. The lower case part 241 has a storage space in which the cylindrically shaped unit batteries 210 are aligned. The upper case part 242 is combined with the lower case part 241 and covers the storage space of the lower case part 241. The battery pack 200 further includes a protection circuit board 250. A space in which the protection circuit board 250 is installed is disposed at an end of the lower case part 241.

Each of the cylindrically shaped unit batteries 210 has a flat sections 210p facing a corresponding flat section 210p of the other cylindrically shaped unit battery 210 in the same row. The cylindrically shaped unit batteries 210 are aligned in three rows in the preferred embodiment. However, the present invention is not limited to providing three rows of the aligned cylindrically shaped unit batteries 210 Instead more or less than three rows, as well as different types of batteries other than cylindrically shaped unit batteries may be provided.

The lead member 220 is installed between the left and right columns of the cylindrically shaped unit batteries 210, as shown in FIG. 8. The lead member 220 includes sides 220a and 220c disposed in parallel with each other, and a curved portion 220b disposed between and connecting the sides 220a and 220c. In more detail, the lead member 220 is embodied in the form of a long plate in which the curved portion 220b is formed in the middle of the lead member 220. The sides 220a and 220c of the lead member 220 respectively correspond to two different polarities of the plurality of cylindrically shaped unit batteries 210. In more detail, the left and right cylindrically shaped unit batteries 210 in each row are connected in parallel to the sides 220a and 220c of the lead member 220, respectively.

The support member 230 is disposed between the sides 220a and 220c of the lead member 220 in this embodiment. The support member 230 is formed to have a length corresponding to a length of the lead member 220 and is inserted throughout the plurality of cylindrically shaped unit batteries 210 aligned in three rows. Unlike the support member 130 shown in FIG. 6 which is integrally formed with the lower case part 141, the support member 230 shown in FIG. 8 is not integrally formed with the lower case part 241. The operation of the support member 230 is substantially similar to the operation of the support member 130 described in detail with reference to FIGs. 4 and 5, and thus the detailed description thereof is not repeated. A terminal 260 is electrically connected to one end of the plurality of cylindrically shaped unit batteries 210, as shown in FIG. 9. An electrode cap 212 corresponds to one of the polarities of the plurality of cylindrically shaped unit batteries 210.

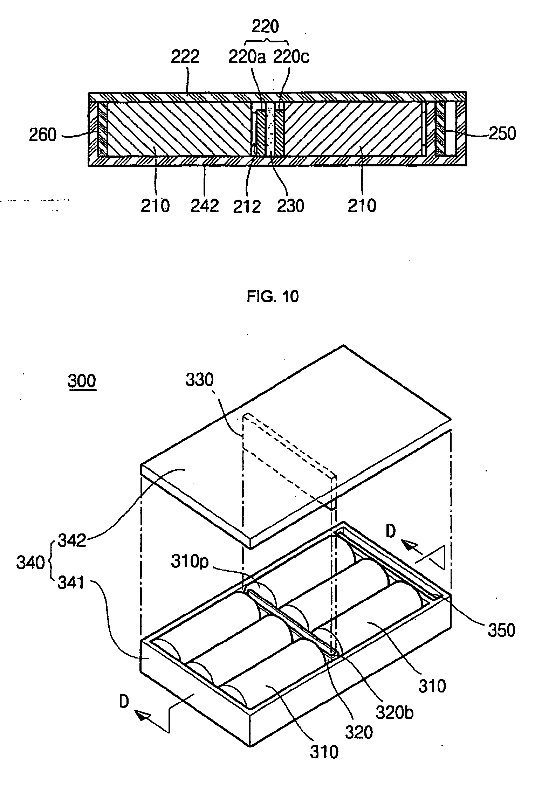

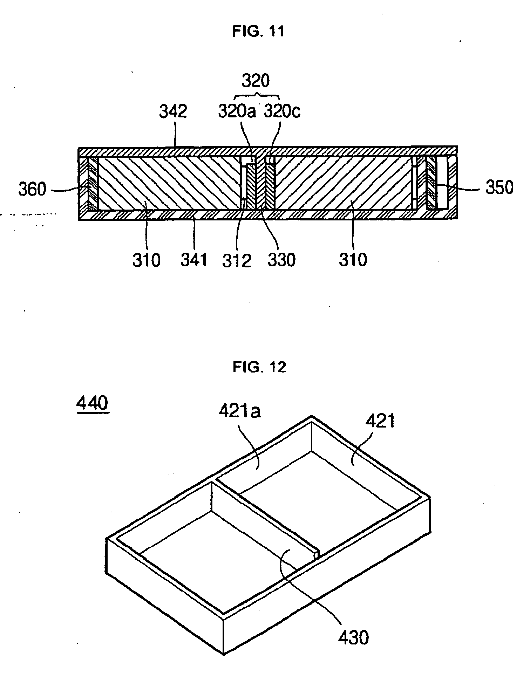

FIG. 10 is an exploded perspective view of a battery pack according to another embodiment of the present invention. FIG. 11 is a cross-sectional view of the battery pack of FIG. 10 taken along a line D-D in FIG. 10.

Referring to FIGs. 10 and 11, the battery pack 300 includes a plurality of cylindrically shaped unit batteries 310, a lead member 320, a support member 330, and an external case 340. The external case 340 has a storage space in which the cylindrically shaped unit batteries 310 are stored and aligned in rows. The external case 340 includes a lower case part 341 and an upper case part 342. The lower case part 341 has the storage space in which the cylindrically shaped unit batteries 310 are stored and aligned in rows. The upper case part 342 is combined with the lower case part 341 and covers the storage space of the lower case part 341.

As shown in FIG. 10, the support member 330 protrudes from an inner surface of the external case 342. The support member 330 is disposed between the sides 320a and 320c connected to a curved portion 320b of the lead member 320 that will be described later. In more detail, the support member 330 protrudes from the wide inner surface of the upper case part 342 that faces the bottom surface of the lower case part 341. The support member 330, for example, is inserted throughout the plurality of cylindrically shaped unit batteries 310 aligned in three rows. However, the present invention is not limited thereto. The support member 330 may instead be provided plurally so that each support member 330 may be inserted into a corresponding row of the plurality of cylindrically shaped unit batteries 310.

The upper case part 342 may be a resin molding integrally formed with the support member 330. The battery pack 300 further includes a protection circuit board 350. A space to install the protection circuit board 350 is disposed at an end of the lower case part 341. The lower case part 341 may also be a resin molding. It is understood that the lower case part 341 and the upper case part 342 are not limited to being made of resin, and either or both of the lower case part 341 and the upper case part 342 may be made of other types of materials commonly used to make battery pack cases, such as plastic, etc.

Each of the cylindrically shaped unit batteries 310 has a flat section 310p arranged to face a corresponding flat section 310p of the other cylindrically shaped unit battery 310 in the same row. The cylindrically shaped unit batteries 310 may be aligned in three rows so that each flat section 310p faces the corresponding flat section 310p of the other cylindrically shaped unit battery 310 in the same row, although it is understood that more or less than three rows of cylindrically shaped unit batteries 310 may be used in different embodiments.

The lead member 320 is installed between the left and right columns of the cylindrically shaped unit batteries 310 which are aligned in three rows. The lead member 320 includes sides 320a and 320c disposed in parallel and a curved portion 320b disposed between and connecting the sides 320a and 320c. The lead member 320 is in the form of a long plate in the preferred embodiment in which the curved portion 320b is formed in the middle of the lead member 320. The sides 320a and 320c of the lead member 320 are electrically connected to two different polarities of the plurality of cylindrically shaped unit batteries 310 respectively disposed at the sides 320a and 320c. The cylindrically shaped unit batteries 310 are connected in parallel to the sides 320a and 320c of the lead member 320. A terminal 360 is electrically connected to one end of the plurality of cylindrically shaped unit batteries 310, as shown in FIG. 11. An electrode cap 312 corresponds to one of the polarities of the plurality of cylindrically shaped unit batteries 310.

FIG. 12 is a perspective view of a battery case according to an embodiment of the present invention. Referring to FIG. 12, the battery case (which is also referred to as an "external case") 440 includes a lower case part 421 to store a plurality of cylindrically shaped unit batteries having a side surface 421 a and a support member 430 that protrudes from and is connected to at least one side of the lower case part 421. The support member 430 protrudes from the side 421a of the lower case part 421. Although not shown in FIG. 12, the support member 430 is inserted between sides of a lead member having a curved portion connecting the two sides, such as, for example, the lead member 20 having the sides 20a and 20c and the curved portion 20b shown in FIG. 1. Furthermore, it is understood that the support member 430 is not limited to protruding from the side 421 a, and may instead protrude from a bottom of the external case 421, a top (not shown) of the external case 421, etc.

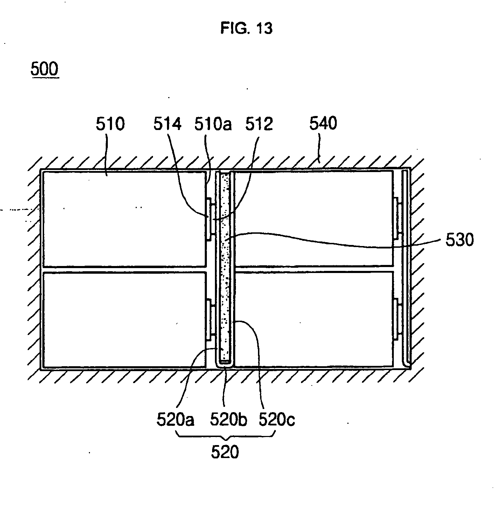

FIG. 13 is a plan view of a battery pack according to another embodiment of the present invention. Referring to FIG. 13, the battery pack 500 includes a plurality of prismatic shaped unit batteries 510, a lead member 520, a support member 530, and an external case 540. The external case 540 has a storage space in which the prismatic shaped unit batteries 510 are stored and aligned in rows, although it is understood that the prismatic shaped unit batteries 510 may be stored and aligned otherwise.

Each of the prismatic shaped unit batteries 510 has a relatively narrow side surface 510a which is disposed to face a relatively narrow side surface 510a of a corresponding prismatic shaped unit battery 510 in the same row. The prismatic shaped unit batteries 510 are aligned in two rows in the preferred embodiment. However, the present invention is not limited thereto. Instead the prismatic shaped unit batteries 510 may be aligned in more or less than two rows.

The lead member 520 is installed between the left and right columns of the plurality of prismatic shaped unit batteries 510 which are aligned in two rows. The lead member 520 includes sides 520a and 520c that are disposed in parallel to each other and a curved portion 520b formed between and connecting the sides 520a and 520c. The sides 520a and 520c of the lead member 520 are electrically connected to two different polarities of the plurality of prismatic shaped unit batteries 510. The ends of the prismatic shaped unit batteries 510 which are oriented along the left and right columns are disposed in parallel to the sides 520a and 520c of the lead member 520.

The support member 530 is disposed between the sides 520a and 520c of the lead member 520. The support member 530 is sufficiently long to be inserted between the entire left and right columns of the plurality of prismatic shaped unit batteries 510 in the preferred embodiment. However, the present invention is not limited to this. The battery pack 500 may instead have a plurality of the support members 530 corresponding to each of the rows of the prismatic shaped unit batteries 510. The operation of the support member 530 is substantially similar to the operation of the support member 130 described in detail with reference to FIGs. 4 and 5, and thus a detailed description thereof is not repeated. An electrode terminal 512 corresponds to one of the polarities of the plurality of prismatic secondary batteries 510. An insulating gasket 514 insulates the electrode terminal 512.

The plurality of unit batteries of the embodiments of the present invention, such as the unit batteries 10 (FIG. 1), 110 (FIG. 4), 210 (FIG. 8), 310 (FIG. 10), and 510 (FIG. 13) can be secondary batteries that can be repeatedly charged and discharged. However, it is understood that the plurality of unit batteries are not limited to being rechargeable secondary batteries.

As described above, a battery pack according to preferred embodiments of the present invention prevents a plurality of batteries from moving in a part of the battery pack electrically connecting the batteries in order to maintain a constant resistance value of the electrical connection between the batteries and to maintain the electrical connection between the batteries in a more stable fashion, thereby maintaining the characteristics of charging and discharging of the battery pack and preventing the performance of the batteries from being reduced.

Also, lead structures of preferred embodiments connect a plurality of batteries of a battery pack and prevent the batteries from moving and prevent a large external force from bending, deforming or otherwise adversely affecting a curved portion of a lead member in the lead structure, thereby preventing the lead structure from being damaged and preventing the performance of the batteries from being reduced either due to damage of the batteries during use or a defective production of the batteries when the batteries are manufactured.

Although a few embodiments of the present invention have been shown and described, it would be appreciated by those skilled in the art that changes may be made in this embodiment without departing from the scope of the invention, which is defined in the claims.

## Claims

1. A battery pack (100, 200, 300, 500) comprising:
an external case In which a storage space is formed;
a plurality of unit batteries (110, 210, 310, 510) aligned in the storage space of the external case;
a lead member (120, 220, 320, 520) having a curved portion and two sides extending from two ends of the curved portion, wherein the lead member (120, 220, 320, 520) is placed between the plurality of unit batteries and the sides of the lead member (120, 220, 320, 520) are electrically connected to the plurality of unit batteries; and
a support member (130, 230, 330, 530) inserted between the sides of the lead member (120, 220, 320, 520) to prevent the plurality of unit batteries (110, 210, 310, 510) from moving within the external case:
wherein the support member (130, 23, 330, 530) is a rib integrally formed with the inner surface of the external case, wherein the support member (130, 230, 330, 530) is formed of an elastic material.

2. A battery pack (100, 200, 300, 500) according to claim 1, wherein the lead member (120, 220, 320, 520) is formed of an elongated plate, and wherein a length of the support member (130, 230, 330, 530) is half of a maximum length of the elongated plate.

3. A battery pack according to claim 1 or claim 2, wherein the support member (130, 230, 330, 530) is formed of an insulating material.

4. A battery pack according to any preceding claim, wherein the external case comprises a resin molding integrally formed with the support member (130, 230, 330, 530).

5. A battery pack according to any preceding claim, wherein the external case comprises a lower case part comprising the storage space and an upper case part to cover the storage space of the lower case part,
wherein the support member (130, 230, 330, 530) protrudes from an inner surface of the lower case part.

6. A battery pack according to any one of claims 1 to 4, wherein the external case comprises a lower case part comprising the storage space and an upper case part to cover the storage space of the lower case part,
wherein the support member (130, 230, 330, 530) protrudes from an inner surface of the upper case part facing an inner surface of the lower case part.

7. A battery pack according to any one of claims 1 to 4, wherein the external case comprises a lower case part comprising the storage space and four side surfaces connected to the lower case part and disposed in a substantially perpendicular direction to an inner surface of the lower case part, and an upper case part arranged to cover the storage space of the lower case part,
wherein the support member (130, 230, 330, 530) protrudes from one of the side surfaces of the lower case part.

8. A battery pack according to any preceding claim, wherein the plurality of unit batteries (110, 210, 310, 510) comprises rechargeable secondary batteries.

9. A battery pack according to any preceding claim, wherein the plurality of unit batteries (110, 210, 310, 510) comprise at least one pair of cylindrically shaped or prismatic shaped unit batteries with flat sections at corresponding ends thereof and which are aligned such that a flat section of one of the cylindrically shaped or prismatic shaped unit batteries faces a flat section of another one of the cylindrically shaped or prismatic shaped unit batteries;
wherein the lead member (120, 220, 320, 520) is disposed between the said facing flat sections of the one and the other cylindrical or prismatic shaped unit batteries and is electrically connected to the said facing flat sections of the one and the other cylindrical or prismatic shaped unit batteries facing each other.

10. A battery pack according to claim 9, wherein the plurality of unit batteries comprises a plurality of the pairs of cylindrically shaped or prismatic shaped unit batteries aligned in a plurality of rows.

11. A battery pack according to claim 10, wherein a lead member is installed between the flat sections facing each other In each of the plurality of rows of the cylindrically shaped or prismatic shaped unit batteries,
wherein plural support members are provided and wherein each of the support members is inserted in a lead member such that the support members respectively correspond to each row of the cylindrically shaped or prismatic shaped unit batteries.

12. A battery pack according to claim 10, wherein the lead member (120, 220, 320, 520) extends across the plurality of rows of the cylindrically shaped or prismatic shaped unit batteries,
wherein the support member (130, 230, 330, 530) is inserted into the lead member (120, 220, 320, 520) and extends across the plurality of rows of the cylindrically shaped or prismatic shaped unit batteries.

## Patentansprüche

1. Batteriesatz (100, 200, 300, 500), umfassend:
ein äußeres Gehäuse, in dem ein Unterbringungsraum ausgebildet ist;
eine Vielzahl von Einheitsbatterien (110, 210, 310, 510), die im Unterbringungsraum des äußeren Gehäuses ausgerichtet sind;
ein leitfähiges Teil (120, 220, 320, 520) mit einem gekrümmten Teilstück und zwei Seiten, die sich von zwei Enden des gekrümmten Teilstücks aus erstrecken, worin das leitfähige Teil (120, 220, 320, 520) zwischen der Vielzahl von Einheitsbatterien angeordnet ist und die Seiten des leitfähigen Teils (120, 220, 320, 520) mit der Vielzahl von Einheitsbatterien elektrisch verbunden sind; und
ein Halteteil (130, 230, 330, 530), das zwischen die Seiten des leitfähigen Teils (120, 220, 320, 520) eingesetzt ist, um zu verhindern, dass sich die Vielzahl von Einheitsbatterien (110, 210, 310, 510) innerhalb des äußeren Gehäuses bewegt;
worin das Halteteil (130, 230, 330, 530) eine Rippe ist, die aus einem Stück mit der Innenseite des äußeren Gehäuses gebildet ist, worin das Halteteil (130, 230, 330, 530) aus einem elastischen Material gebildet ist.

2. Batteriesatz (100, 200, 300, 500) nach Anspruch 1, worin das leitfähige Teil (120, 220, 320, 520) aus einem länglichen Blech gebildet ist und worin eine Länge des Halteteils (130, 230, 330, 530) halb so groß wie eine maximale Länge des länglichen Blechs ist.

3. Batteriesatz nach Anspruch 1 oder 2, worin das Halteteil (130, 230, 330, 530) aus einem isolierenden Material gebildet ist.

4. Batteriesatz nach einem der vorhergehenden Ansprüche, worin das äußere Gehäuse ein Kunstharzformteil umfasst, das mit dem Halteteil (130, 230, 330, 530) aus einem Stück geformt ist.

5. Batteriesatz nach einem der vorhergehenden Ansprüche, worin das äußere Gehäuse einen unteren Gehäuseteil, der den Unterbringungsraum umfasst, und einen oberen Gehäuseteil, um den Unterbringungsraum des unteren Gehäuseteils abzudecken, umfasst,
worin das Halteteil (130, 230, 330, 530) von einer Innenseite des unteren Gehäuseteils hervorsteht.

6. Batteriesatz nach einem der Ansprüche 1 bis 4, worin das äußere Gehäuse einen unteren Gehäuseteil, der den Unterbringungsraum umfasst, und einen oberen Gehäuseteil, um den Unterbringungsraum des unteren Gehäuseteils abzudecken, umfasst,
worin das Halteteil (130, 230, 330, 530) von einer Innenseite des oberen Gehäuseteils hervorsteht, die einer Innenseite des unteren Gehäuseteils zugewandt ist.

7. Batteriesatz nach einem der Ansprüche 1 bis 4, worin das äußere Gehäuse umfasst: einen unteren Gehäuseteil, der den Unterbringungsraum und vier Seitenflächen, die mit dem unteren Gehäuseteil verbunden sind und in einer im wesentlichen senkrechten Richtung zu einer Innenseite des unteren Gehäuseteils angeordnet sind, umfasst, und einen oberen Gehäuseteil, der dafür eingerichtet ist, den Unterbringungsraum des unteren Gehäuseteils abzudecken,
worin das Halteteil (130, 230, 330, 530) von einer der Seitenflächen des unteren Gehäuseteils hervorsteht.

8. Batteriesatz nach einem der vorhergehenden Ansprüche, worin die Vielzahl von Einheitsbatterien (110, 210, 310, 510) wiederaufladbare Sekundärbatterien umfasst.

9. Batteriesatz nach einem der vorhergehenden Ansprüche, worin die Vielzahl von Einheitsbatterien (110, 210, 310, 510) mindestens ein Paar von zylinderförmigen oder prismenförmigen Einheitsbatterien mit flachen Abschnitten an entsprechenden Enden derselben umfassen und diese so ausgerichtet sind, dass ein flacher Abschnitt einer der zylinderförmigen oder prismenförmigen Einheitsbatterien einem flachen Abschnitt einer anderen der zylinderförmigen oder prismenförmigen Einheitsbatterien zugewandt ist;
worin das leitfähige Teil (120, 220, 320, 520) zwischen den einander zugewandten flachen Abschnitten der einen und der anderen zylinderförmigen oder prismenförmigen Einheitsbatterie angeordnet ist und mit den einander zugewandten flachen Abschnitten der einen und der anderen zylinderförmigen oder prismenförmigen Einheitsbatterie, die einander gegenüberliegen, elektrisch verbunden ist.

10. Batteriesatz nach einem der Ansprüche 9, worin die Vielzahl von Einheitsbatterien eine Vielzahl der Paare von zylinderförmigen oder prismenförmigen Einheitsbatterien umfasst, die in einer Vielzahl von Reihen ausgerichtet sind.

11. Batteriesatz nach Anspruch 10, worin ein leitfähiges Teil zwischen den einander zugewandten flachen Abschnitten in jeder der Vielzahl von Reihen der zylinderförmigen oder prismenförmigen Einheitsbatterien installiert ist,
worin mehrere Halteteile vorgesehen sind und worin jedes der Halteteile so in ein leitfähiges Teil eingesetzt wird, dass die Halteteile jeweils jeder Reihe der zylinderförmigen oder prismenförmigen Einheitsbatterien entsprechen.

12. Batteriesatz nach Anspruch 10, worin sich das leitfähige Teil (120, 220, 320, 520) über die Vielzahl von Reihen der zylinderförmigen oder prismenförmigen Einheitsbatterien erstreckt,
worin das Halteteil (130, 230, 330, 530) in das leitfähige Teil (120, 220, 320, 520) eingesetzt wird und sich über die Vielzahl von Reihen der zylinderförmigen oder prismenförmigen Einheitsbatterien erstreckt.

## Revendications

1. Bloc de batteries (100, 200, 300, 500) comprenant:
un boîtier externe dans lequel un espace de stockage est formé ;
une pluralité de batteries unitaires (110, 210, 310, 510) alignées dans l'espace de stockage du boîtier externe ;
un élément conducteur (120, 220, 320, 520) ayant une partie incurvée et deux côtés s'étendant des deux extrémités de la partie incurvée, dans lequel l'élément conducteur (120, 220, 320, 520) est placé entre la pluralité de batteries unitaires et les côtés de l'élément conducteur (120, 220, 320, 520) sont connectés électriquement à la pluralité de batteries unitaires ; et
un élément de support (130, 230, 330, 530) inséré entre les côtés de l'élément conducteur (120, 220, 320, 520) pour empêcher un déplacement de la pluralité de batteries unitaires (110, 210, 310, 510) dans le boîtier externe ;
dans lequel l'élément de support (130, 230, 330, 530) est une nervure formée d'un seul tenant avec la surface intérieure du boîtier externe, dans lequel l'élément de support (130, 230, 330, 530) est constitué d'un matériau élastique.

2. Bloc de batteries (100, 200, 300, 500) selon la revendication 1, dans lequel l'élément conducteur (120, 220, 320, 520) est constitué d'une plaque allongée, et dans lequel une longueur de l'élément de support (130, 230, 330, 530) est égale à la moitié d'une longueur maximum de la plaque allongée.

3. Bloc de batteries selon la revendication 1 ou la revendication 2, dans lequel l'élément de support (130, 230, 330, 530) est constitué d'un matériau isolant.

4. Bloc de batteries selon l'une quelconque des revendications précédentes, dans lequel le boîtier externe comprend un moulage en résine formé d'un seul tenant avec l'élément de support (130, 230, 330, 530).

5. Bloc de batteries selon l'une quelconque des revendications précédentes, dans lequel le boîtier externe comprend une partie de boîtier inférieure comprenant l'espace de stockage et une partie de boîtier supérieure pour recouvrir l'espace de stockage de la partie de boîtier inférieure,
dans lequel l'élément de support (130, 230, 330, 530) fait saillie d'une surface intérieure de la partie de boîtier inférieure.

6. Bloc de batteries selon l'une quelconque des revendications 1 à 4, dans lequel le boîtier externe comprend une partie de boîtier inférieure comprenant l'espace de stockage et une partie de boîtier supérieure pour recouvrir l'espace de stockage de la partie de boîtier inférieure,
dans lequel l'élément de support (130, 230, 330, 530) fait saillie d'une surface intérieure de la partie de boîtier supérieure faisant face à une surface intérieure de la partie de boîtier inférieure.

7. Bloc de batteries selon l'une quelconque des revendications 1 à 4, dans lequel le boîtier externe comprend une partie de boîtier inférieure comprenant l'espace de stockage et quatre surfaces latérales reliées à la partie de boîtier inférieure et disposées dans une direction sensiblement perpendiculaire à une surface intérieure de la partie de boîtier inférieure, et une partie de boîtier supérieure agencée pour recouvrir l'espace de stockage de la partie de boîtier inférieure,
dans lequel l'élément de support (130, 230, 330, 530) fait saillie de l'une des surfaces latérales de la partie de boîtier inférieure.

8. Bloc de batteries selon l'une quelconque des revendications précédentes, dans lequel la pluralité de batteries unitaires (110, 210, 310, 510) comprend des batteries secondaires rechargeables.

9. Bloc de batteries selon l'une quelconque des revendications précédentes, dans lequel la pluralité de batteries unitaires (110, 210, 310, 510) comprend au moins une paire de batteries unitaires de forme cylindrique ou de forme prismatique avec des sections plates aux extrémités correspondantes de celles-ci et qui sont alignées de sorte qu'une section plate de l'une des batteries unitaires de forme cylindrique ou de forme prismatique soit face à une section plate d'une autre des batteries unitaires de forme cylindrique ou de forme prismatique ;
dans lequel l'élément conducteur (120, 220, 320, 520) est disposé entre lesdites sections plates se faisant face de ladite une et de l'autre des batteries unitaires de forme cylindrique ou prismatique et est connecté électriquement auxdites sections plates se faisant face de ladite une et de l'autre des batteries unitaires de forme cylindrique ou prismatique se faisant face.

10. Bloc de batteries selon la revendication 9, dans lequel la pluralité de batteries unitaires comprend une pluralité de paires de batteries unitaires de forme cylindrique ou de forme prismatique alignées en une pluralité de rangées.

11. Bloc de batteries selon la revendication 10, dans lequel un élément conducteur est installé entre les sections plates se faisant face dans chacune de la pluralité de rangées des batteries unitaires de forme cylindrique ou de forme prismatique,
dans lequel plusieurs éléments de support sont prévus et dans lequel chacun des éléments de support est inséré dans un élément conducteur de sorte que les éléments de support correspondent respectivement à chaque rangée des batteries unitaires de forme cylindrique ou de forme prismatique.

12. Bloc de batteries selon la revendication 10, dans lequel l'élément conducteur (120, 220, 320, 520) s'étend à travers la pluralité de rangées des batteries unitaires de forme cylindrique ou de forme prismatique,
dans lequel l'élément de support (130, 230, 330, 530) est inséré dans l'élément conducteur (120, 220, 320, 520) et s'étend à travers la pluralité de rangées des batteries unitaires de forme cylindrique ou prismatique.
